# EUROPÄISCHE PATENTSCHRIFT

(11) **EP 3 119 607 B1**
(45) Veröffentlichungstag und Bekanntmachung des Hinweises auf die Patenterteilung: **28.02.2018**
(21) Anmeldenummer: 15711472.9
(22) Anmeldetag: 17.03.2015
(51) Int. Cl.: B32B 37/10, B44C 5/04, B32B 29/00, B32B 29/06, B32B 3/30

(54) **SCHICHTSTOFF, PRESSMITTEL UND VERFAHREN ZU DESSEN HERSTELLUNG**
LAMINATE, PRESSING MEANS, AND METHOD FOR THE PRODUCTION THEREOF
MATÉRIAU STRATIFIÉ, AINSI QUE MOYEN DE COMPRESSION ET PROCÉDÉ POUR LE FABRIQUER

(30) Priorität: 18.03.2014 DE 102014003722; 03.04.2014 DE 102014104754
(43) Veröffentlichungstag der Anmeldung: 25.01.2017
(73) Patentinhaber: Fritz Egger GmbH & Co. OG, 3105 Unterradlberg (AT)
(72) Erfinder: ARTHOLD, Andreas, A-Kirchdorf i.T. 6382 (AT)
(74) Vertreter: Cohausz & Florack
(86) Internationale Anmeldenummer: PCT/EP2015/055496
(87) Internationale Veröffentlichungsnummer: WO 2015/140134

(56) Entgegenhaltungen:
- US-A- 3 738 900
- US-A- 4 062 992
- US-A- 4 140 837

## Beschreibung

Die Erfindung betrifft Schichtstoff zum Aufbringen auf einem Trägermaterial, insbesondere auf eine Trägerplatte, mit einer harzimprägnierten Dekorschicht und mit mindestens einer harzimprägnierten Kernschicht, wobei die Dekorschicht und die mindestens eine Kernschicht miteinander verpresst sind und wobei die Oberfläche der der Dekorschicht gegenüberliegend angeordneten Kernschicht mit einer geprägten Struktur versehen ist. Die Erfindung betrifft auch ein Verfahren zur Herstellung eines Schichtstoffs.

Aus dem Stand der Technik bekannte Schichtstoffe sind ein vielseitig einsetzbarer Werkstoff, der in Kombination mit Holzwerkstoffen oder anderen Trägermaterialien, zu so genannten Verbundelementen verarbeitet wird. Die Anwendungen sind vielfältig und erfordern den Einsatz verschiedener Schichtstoffqualitäten, die auf die späteren Einsatzgebiete abzustimmen sind. Klassische Anwendungen bzw. Einsatzbereiche sind z.B. Küchenindustrie, Türenindustrie, Büromöbelindustrie, Messebau, Ladenbau, dekorativer Innenausbau, Fußböden, Schiffsbau und Fahrzeugbau.

Die Schichtstoffe sind dekorative Schichtstoffe auf Basis härtbarer Harze. Sie sind mehrschichtig aufgebaut und bestehen bspw. zumindest aus einem melaminharzimprägnierten Dekorpapier als Dekorschicht und einem oder mehreren mit Phenolharz imprägnierten Natronkraftpapieren als Kernschichten, die unter hohem Druck und Wärme miteinander verpresst werden. Der Schichtstoffaufbau, Harz- und Papierqualitäten, Oberflächenstrukturen, die Verwendung spezieller Overlays (Schutzschichten) sowie die Pressparameter bei der Herstellung entscheiden über die Schichtstoffqualität und somit über die spätere Anwendung bzw. das Einsatzgebiet.

Die dekorative Seite des Schichtstoffes, die Dekorschicht, kann aus Dekorpapier bestehen, das als Holzdekor oder Fantasiedekor bedruckt wird, oder aus Uni- oder Weißdekoren, die bspw. als Kunststoffschichten ausgebildet sind. Die Flächengewichte der Dekorpapiere liegen in der Regel zwischen 50 - 160 g/m².

Ein wesentlicher Bestandteil von Schichtstoffen können Kernpapiere, bspw. Natronkraftpapiere sein, die auch als Kernschichten oder Kernlagen bezeichnet werden. Das Flächengewicht der Kernpapiere bzw. Natronkraftpapiere liegt im Bereich von 70 - 300 g/m², wobei hohe Grammaturen vorwiegend für Kompaktplatten verwendet werden.

Ein Overlay ist ein gebleichtes, transparentes Papier mit hohem Harzaufnahmevermögen und wird zum Schutz des Dekors, insbesondere des Druckbildes von bedruckten Dekorpapieren und zur Verbesserung der Abriebbeständigkeit eingesetzt.

Ein Underlay oder Barrierepapier ist eine Papierlage zwischen Dekor- und Kernpapier bzw. Natronkraftpapier, das zur Verhinderung chemischer Beeinflussung zwischen den Harzen oder zur Erzielung optischer Effekte verwendet wird.

Melamin-Formaldehyd-Harze ergeben transparente und harte Beschichtungen und sind daher bestens als Oberflächenschicht von dekorativen Schichtstoffen geeignet. Zur Imprägnierung der Kernlagen werden, nicht zuletzt aus Kostengründen, relativ elastische Phenol-Formaldehyd-Harze eingesetzt.

Dekorative Schichtstoffe können also aus Zellulosefaserbahnen bzw. Papier, die mit wärmehärtenden Harzen imprägniert sind, bestehen. Andere natürliche oder künstliche Materialien können ebenfalls als Trägermaterial für den Harz eingesetzt werden. So sind Schichtstoffe aus mit Harz imprägnierten Glasfaservliesen ebenfalls bekannt. Die Schichten, vorzugsweise die Papierschichten werden mit den nachfolgend beschriebenen Herstellverfahren miteinander zum Schichtstoff verbunden. Die Zufuhr von Wärme und Druck bewirkt dabei ein Fließen und anschließendes Aushärten der Harze. Durch die Vernetzung der Harze, vorzugsweise verstärkt durch die Zellulosefasern der Papiere, entsteht ein sehr dichtes Material mit geschlossener Oberfläche. Dabei können einzelne Papierschichten, auch eine äußere Papierschicht, vor dem Verpressen unbeharzt sein, da beim Verpressen der Harz auch zuvor unbeharzte Schichten durchdringt.

Zu Beginn des Verfahrens werden die Schichten des Schichtaufbaus übereinander gelegt und anschließend zwischen zwei Pressmittel in Form von Presseblechen oder Pressbändern gebracht. Diese Pressmittel sind auf eine vorgegebene Temperatur aufgeheizt, so dass während des Pressvorgangs nicht nur ein ausreichender Druck sondern auch die benötigte Temperatur auf die Schichten aufgebracht wird. Das Hochdruckverfahren ist also durch die gleichzeitige Anwendung von Wärme (Temperatur ≥ 120 °C) und einem hohen Druck (≥ 25 bar) bestimmt, damit die wärmehärtbaren Harze fließen und anschließend aushärten, um einen homogenen, nicht porösen Werkstoff mit erhöhter Dichte (≥ 1,35 g/cm³) und der geforderten Oberflächenbeschaffenheit herzustellen.

Die zuvor genannten Pressmittel weisen in der Regel eine sehr glatte Oberfläche auf, um eine entsprechend glatte und somit glänzende Oberfläche des Schichtstoffs zu erreichen. Ebenso ist bekannt, das auf der Seite der Dekorschicht anliegende Pressmittel mit einer makroskopischen Struktur zu versehen, um eine sichtbare, möglicherweise mit dem Dekor synchron verlaufende Oberflächenstruktur auf dem Dekor zu erzielen. Dieses führt zusammen mit dem Dekor zu einer verbesserten naturnahen Oberflächenerscheinung.

Als Herstellverfahren sind CPL-Verfahren, CPL ist die Abkürzung für Continuous Pressed Laminates, und HPL-Verfahren, HPL ist die Abkürzung für High Pressure Laminates, bekannt.

CPL wird in kontinuierlich arbeitenden Doppelbandpressen mit einem Pressdruck zwischen 25 und 50 bar und Temperaturen zwischen 150 °C und 170 °C hergestellt. Abhängig von der Schichtstoffdicke und der Presszonenlänge variiert die Vorschubgeschwindigkeit zwischen 8 und 30 m/min.

HPL wird in diskontinuierlich arbeitenden Pressen oder Mehretagenpressen mit einem Pressdruck zwischen 70 und 80 bar und Temperaturen von über 120 °C hergestellt. Die Etagenpressen können bis zu 45 Etagen haben und jede Etage wird mit bis zu 24 Schichtstofflagen (Dicke ca. 0,50 bis 1,90 mm) gefüllt. Abhängig von der Pressenbeschickung und der maximalen Temperatur dauert der komplette Presszyklus inkl. einer optionalen Rückkühlung etwa 100 Minuten.

Die Längen- und Breitenformatierung von HPL erfolgt in gesonderten Arbeitsschritten. CPL hingegen kann direkt online nach der Presse sowohl in der Breite geschnitten und /oder auf Länge formatiert oder auf Rolle gewickelt werden.

Unter Schichtstoffen werden dekorative Schichtstoffe verstanden, die unterschiedlichen Anforderungen genügen können. So gibt es bspw. Schichtstoffe in Standard-Qualität, nachformbare dekorative Schichtstoffe, die bei höheren Temperaturen auch geformt werden können, oder dekorative Schichtstoffe mit verbessertem Brandverhalten.

Nach der Herstellung des Schichtstoffes wird dieser, meistens in einem separaten Verfahrensschritt und mit zeitlicher Verzögerung, mit einem Trägermaterial bzw. einer Trägerplatte verklebt. Um Schichtstoffe mit einer Trägerplatte besser verkleben zu können, werden deren Rückseiten geschliffen. Durch den Schliff wird eine Oberflächenstruktur geschaffen, die gut benetzbar ist. Nachteilig am Abschleifen der Rückseite ist jedoch, dass der Schichtstoff dadurch unsymmetrisch wird und dazu neigt, sich zu wölben. Daher müssen recht umfangreiche Lager- und Manipulationsmaßnahmen und besondere Vorkehrungen getroffen werden. Zusätzlich wird auch die Verarbeitung dadurch wesentlich erschwert.

Zudem führt das Schleifen zu einem zumindest teilweisen, vorzugsweise nahezu vollständigem Abtragen der obersten Harzschicht, so dass die darunter angeordnete Papierschicht zumindest teilweise freigelegt wird. Die Oberflächenspannung wird also verringert und die Benetzbarkeit der Oberfläche verändert sich. Feuchtigkeit kann daher während einer Lagerung in den Schichtstoff eindringen, bevor der Klebstoff kurz vor der Verarbeitung aufgetragen werden kann. Außerdem kann der Klebstoff zumindest teilweise zu tief in den Schichtaufbau eindringen, so dass für das Verkleben mit der Trägerplatte mehr Klebstoff als notwendig eingesetzt werden muss.

Aus dem Stand der Technik sind verschiedene der zuvor allgemein erläuterten Ausgestaltungen bekannt. Die US 3,738,900 offenbart Paneele, die eine Trägerplatte als Kernelement aufweisen mit einer strukturierten Oberflächenschicht versehen sind.

Die US 4,062,992 und die US 4,140,837 offenbaren eine Laminatkomponente bestehend aus einer imprägnierten Papierschicht, die mit trockenem Klebstoff-Beschichtungsmaterial versehen ist, in das flockige Fasern eingebettet sind. Die Schichtstruktur wird verpresst, wobei die mit den flockigen Fasern erzeugte Schicht die Rückseite der Laminatkomponente bildet. Diese Rückseite wird genutzt, um die Laminatkomponente mit einem Trägermaterial zu verkleben.

Der vorliegenden Erfindung liegt daher das technische Problem zugrunde, einen Schichtstoff zum Aufbringen auf einem Trägermaterial, insbesondere auf eine Trägerplatte, ein Pressmittel und ein Verfahren zur Herstellung eines Schichtstoffs derart auszugestalten und weiterzubilden, dass die zuvor genannten Nachteile behoben werden.

Das zuvor aufgezeigte technische Problem wird erfindungsgemäß durch einen Schichtstoff dadurch gelöst, dass die geprägte Struktur in Tiefe und Geometrie einer durch Schleifen hergestellten Struktur entspricht und dass die Geometrie der geprägten Struktur einer Schleifriefen-Struktur entspricht.

Dadurch wird eine Oberfläche erreicht, die ähnlich einer geschliffenen Oberfläche gut verklebt werden kann, ohne dass es durch den Vorgang des mechanischen Schleifens der Oberfläche zu einer unregelmäßigen Oberfläche oder zu einer Asymmetrie des Schichtaufbaus kommt. Unter einer Struktur, die im Wesentlichen einer durch Schleifen hergestellten Struktur entspricht, wird im Rahmen dieser Erfindung eine Struktur verstanden, deren Dimensionen vergleichbar mit den Dimensionen einer durch mechanisches Schleifen erzeugten Struktur sind.

Durch das Einprägen der Struktur während der Herstellung des Schichtstoffs wird die oberste Harzschicht moduliert und bleibt als durchgängige und somit versiegelnde Schicht bestehen, so dass trotz des Einbringens der Struktur in der Oberfläche während einer anschließenden Lagerung keine Feuchtigkeit in den Schichtstoff eindringen kann. Der für das Verarbeiten des Schichtstoffs notwendige Klebstoff kann daher in einer geringeren Menge aufgetragen werden, als bei einer oben beschriebenen geschliffenen Oberfläche mit geringer Oberflächenspannung. Dabei müssen kein Qualitätseinbußen bei der Verarbeitung während des Aufklebens auf der Trägerplatte hingenommen werden.

Als Maß und somit als Unterscheidungsmerkmal für die Beschaffenheit der Oberfläche des erfindungsgemäßen Schichtstoffs gegenüber einem geschliffenen Schichtstoff kann die Benetzbarkeit herangezogen werden. Die Benetzbarkeit hängt von der Oberflächenspannung der Oberfläche ab, wobei als Maß der sogenannte Kontaktwinkel gemessen werden kann. Die Größe des Kontaktwinkels zwischen Flüssigkeit und Oberfläche hängt von der Wechselwirkung zwischen der Flüssigkeit und der Oberfläche an der Berührungsfläche ab. Je geringer diese Wechselwirkung ist, desto größer wird der Kontaktwinkel. Aus der Bestimmung des Kontaktwinkels kann somit ein Maß für die Benetzbarkeit bestimmt werden.

Tatsächlich geschliffene Oberflächen, wie sie oben als Stand der Technik beschrieben worden sind, weisen eine geringe Oberflächenspannung und somit eine gute Benetzbarkeit auf. Bei Aufbringen eines Leitungswassertropfens bei Raumtemperatur mit einem maximalen Durchmesser von 15 mm nimmt der Kontaktwinkel einen geringen Wert im Bereich kleiner 20° oder kleiner 10° an. Bei einer erfindungsgemäßen Oberfläche liegt der Kontaktwinkel eines gleichen Wassertropfens oberhalb von 40°, insbesondere oberhalb von 50°. Zur Durchführung der Messung des Kontaktwinkels und zur Charakterisierung der spezifischen Eigenschaften des Leitungswassers wird auf die spezielle Beschreibung verwiesen.

Ein weiteres Unterscheidungsmerkmal zwischen einem erfindungsgemäßen Schichtstoff mit einer geprägten Struktur und einer tatsächlich geschliffenen Schichtstoffoberfläche besteht darin, ob und wie stark Wasser in durch die Oberfläche in den Schichtstoff eindringt. Bei einer erfindungsgemäßen Oberfläche perlt ein aufliegender Wassertropfen ab und das Wasser dringt nicht bzw. nur unmerklich in den Schichtstoff ein, weil die oberste beharzte Schicht eine eingeprägte Struktur aufweist, so dass die beharzte Schicht als solche mit Struktur durchgängig erhalten bleibt. Bei einer geschliffenen Oberfläche eines Schichtstoffes, dessen äußere Schicht aus einem mit Harz imprägnierten, aber an sich wasserabsorbierenden Material, wie beispielweise Papier, besteht, dringt das Wasser des aufliegenden Wassertropfens durch die geschliffene Oberfläche in den Schichtstoff ein. Denn durch das Schleifen der Oberfläche wird die durchgängige Harzschicht verletzt und abschnittweise vollständig entfernt, so dass die wasserabsorbierende Schicht freiliegt. Im Bereich um den Wassertropfen herum entstehen dadurch gut sichtbare nasse Bereiche des Schichtstoffes.

Bei einer bevorzugten Ausgestaltung des erfindungsgemäßen Schichtstoffs entspricht die geprägte Struktur in Tiefe und/oder Geometrie einer durch Schleifen hergestellten Struktur, wobei vorzugsweise die Tiefe der geprägten Struktur eine mittlere Rauigkeit von kleiner als 20 µm, insbesondere kleiner 10 µm aufweist und/oder wobei die Geometrie der geprägten Struktur einer Schleifriefen-Struktur, insbesondere aus parallel gerichteten Riefen, entspricht.

Somit sind auch Strukturen umfasst, die zwar eine Rauigkeit von weniger als 20 µm aufweisen, die jedoch nicht in Form von Riefen, sondern in davon unterschiedlichen geometrischen, vorzugsweise runden oder polygonen Formen ausgebildet sind. Ebenso sind damit Strukturen gemeint, die zwar eine Geometrie entsprechend einer Schleifriefen-Struktur aufweisen, deren Rauigkeit jedoch zumindest teilweise größer als 20 µm ist. Bevorzugt ist jedoch eine Kombination beider Merkmale.

In weiter bevorzugter Weise kann die der als Dekorpapier ausgebildeten Dekorschicht gegenüberliegend angeordnete Schicht als ein in seinen Eigenschaften im Wesentlichen dem Dekorpapier entsprechenden Gegenzugpapier ausgebildet sein. Dadurch kann ein Wölben oder Verformen des Schichtstoffes aufgrund unterschiedlicher mechanischer Spannungen verringert oder gar vermieden werden. In bevorzugter Weise ist die dem Dekorpapier gegenüberliegend angeordnete Schicht mit einem Harz imprägniert, das in seinem Zugverhalten dem Harz entspricht, das für die Imprägnierung des Dekorpapiers angewendet wird, das vorzugsweise vom gleichen Typ ist.

Die zuvor erläuterten Schichten sind vorzugsweise, wie oben erläutert, aus Papierschichten, also Dekorpapier, Kraftpapier als Kernschichten, Gegenzugpapier oder Overlaypapier. Jedoch ist die Erfindung nicht auf die Anwendung verschiedener Papierschichten begrenzt. So können bspw. auch Kunststoffschichten oder Materialien aus natürlichen Stoffen, vorzugsweise aus Holz oder Gewebe, zumindest teilweise zum Aufbau des Schichtstoffes beitragen. Als äußere beharzte Schicht des Schichtstoffes, deren Oberfläche zum Verkleben des Schichtstoffs mit einem Trägermaterial genutzt werden soll, ist dabei bevorzugt eine Papierschicht vorgesehen.

Wie oben bereits erwähnt wurde, benötigt man für die Herstellung eines Schichtstoffes Pressmittel, die über eine vorgegebene Zeitspanne einen ausreichenden Druck und eine vorgegebene Presstemperatur auf den Schichtstoff ausüben. Das oben aufgezeigte technische Problem wird daher auch durch Pressmittel zur Herstellung eines Schichtstoffs zum Aufbringen auf einem Trägermaterial, insbesondere auf eine Trägerplatte gelöst, wobei eine Pressoberfläche mit einer Struktur vorgesehen ist, wobei die Struktur im Wesentlichen einer durch Schleifen hergestellten Struktur entspricht.

Dabei kann auch hier, wie bereits zuvor erläutert worden ist, die zum Prägen der unteren Schicht des Schichtstoffes verwendete Struktur in Tiefe und/oder Geometrie einer durch Schleifen hergestellten Struktur entsprechen, insbesondere die Tiefe der Struktur eine mittlere Rauigkeit von kleiner als 20 µm, insbesondere kleiner 10 µm aufweisen und/oder vorzugsweise die Geometrie der Struktur einer Schleifriefen-Struktur, insbesondere aus parallel gerichteten Riefen aufweisen.

Das oben aufgezeigte technische Problem wird auch durch ein Verfahren zur Herstellung eines Schichtstoffs zum Aufbringen auf einem Trägermaterial, insbesondere auf eine Trägerplatte gelöst, bei dem eine harzimprägnierte Dekorschicht und mindestens eine harzimprägniertes Kernschicht aufeinander geschichtet werden, bei dem die Dekorschicht und die mindestens eine Kernschicht unter hohem Druck und Wärme miteinander verpresst werden und bei dem die Oberfläche der der Dekorschicht gegenüberliegend angeordneten Kernschicht mit einem Pressmittel mit einer Struktur verpresst und geprägt wird. Dieses Verfahren ist dadurch gekennzeichnet, dass die geprägte Struktur in Tiefe und Geometrie einer durch Schleifen hergestellten Struktur entspricht und dass die Geometrie der geprägten Struktur einer Schleifriefen-Struktur entspricht.

Die Erfindung wird im Folgenden anhand von Ausführungsbeispielen näher erläutert, wobei auf die beigefügte Zeichnung Bezug genommen wird. In der Zeichnung zeigen
- Fig. 1: einen Aufbau eines ersten Schichtstoffes vor dem Verpressen,
- Fig. 2: einen Aufbau eines ersten Schichtstoffes vor dem Verpressen,
- Fig. 3: einen fertigen Schichtstoff vor dem Verpressen mit einer Trägerplatte,
- Fig. 4: eine schematische Darstellung einer Bandpresse mit einem erfindungsgemäßen Pressband,
- Fig. 5: eine schematische Darstellung einer Taktpresse mit einem erfindungsgemäßen Pressblech,
- Fig. 6: ein Prinzipschaubild zur Erläuterung des Begriffs Kontaktwinkel,
- Fig. 7: eine schematische Darstellung eines Wassertropfens auf der Oberfläche eines erfindungsgemäßen Schichtstoffs in einer schrägen Draufsicht,
- Fig. 8: eine schematische Darstellung eines Wassertropfens auf der Oberfläche eines erfindungsgemäßen Schichtstoffs in einer Seitenansicht zur Bestimmung des Kontaktwinkels,
- Fig. 9: eine schematische Darstellung eines Wassertropfens auf einer geschliffenen Oberfläche eines Schichtstoffs (Stand der Technik) in einer schrägen Draufsicht und
- Fig. 10: eine schematische Darstellung eines Wassertropfens auf einer geschliffenen Oberfläche eines Schichtstoffs (Stand der Technik) in einer Seitenansicht zur Bestimmung des Kontaktwinkels.

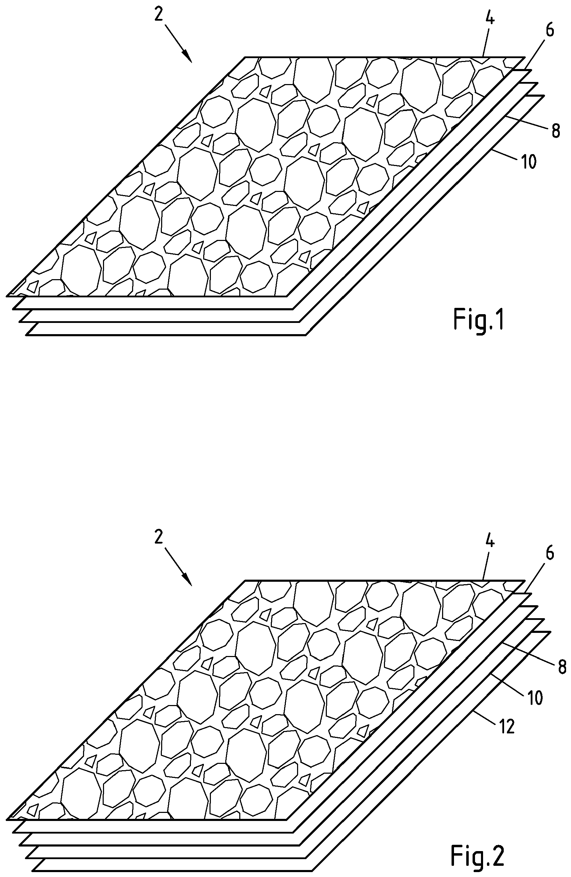

Fig. 1 zeigt einen Schichtstoff 2 zum Aufbringen auf einem Trägermaterial, insbesondere auf eine Trägerplatte, vor dem Verpressen, mit einem harzimprägnierten Dekorpapier 4 als Dekorschicht und mit drei harzimprägnierten Kraftpapieren 6, 8, und 10 als Kernschichten. Das Dekorpapier 4 und die Kernpapiere 6,8 und 10 sind geeignet, um unter hohem Druck und Wärme miteinander verpresst zu werden. Dadurch wird der gewünschte Schichtstoff 2 hergestellt. Das Dekorpapier 4 weist auf der Oberseite ein optisches Muster als Dekor auf. Anstelle des bedruckten Dekorpapiers 4 kann auch ein einfarbiges Dekorpapier verwendet werden.

Erfindungsgemäß wird das dem Dekorpapier 4 gegenüberliegend angeordnete Kraftpapier 10 während des Verpressens mit einer geprägten Struktur versehen, die im Wesentlichen einer durch Schleifen hergestellten Struktur entspricht. Die geprägte Struktur verleiht der Oberfläche der Schicht 10 eine vergrößerte Fläche, so dass das Verkleben mit einer Trägerplatte verbessert wird.

Fig. 2 zeigt ein zweites Ausführungsbeispiel eines erfindungsgemäßen Schichtstoffs 2 vor dem Verpressen mit einer als Gegenzugschicht ausgebildeten untersten Schicht 12. In diesem Fall wird die Gegenzugschicht 12 als unterste Schicht während des Verpressens mit der geprägten Struktur versehen. Um ein Verziehen eines solcherart aufgebauten Schichtstoffes weiter zu minimieren, ist die Gegenzugschicht bzw. das Gegenzugpapier mit einem Harz imprägniert, das ein ähnliches Zugverhalten aufweist wie jenes, das für die Imprägnierung des Dekorpapiers angewendet wird. Vorzugsweise wird dasselbe Harz, insbesondere Melaminharz verwendet.

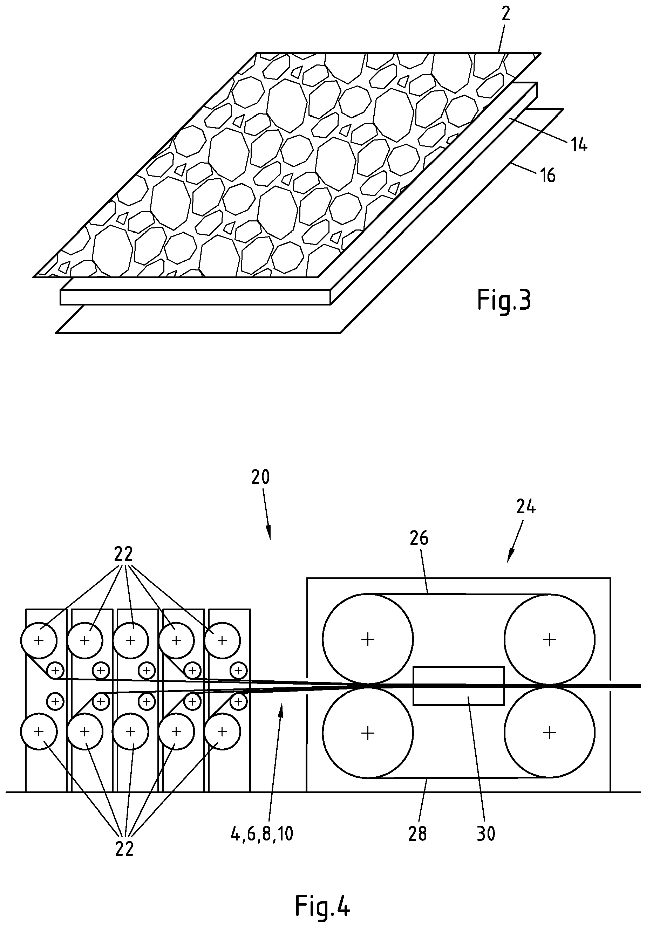

Fig. 3 zeigt einen erfindungsgemäß hergestellten Schichtstoff 2 im Stapel mit einer Trägerplatte 14 aus Holzwerkstoff, bspw. MDF-Platte (mitteldichte Faserplatte) oder HDF-Platte (hochdichte Faserplatte) und einer unterhalb der Trägerplatte 14 angeordneten Gegenzugschicht 16. Dieser Stapel wird dann in einer Presse unter Anwendung von Druck und Temperatur zu einer beschichteten Holzwerkstoffplatte weiter verarbeitet.

Die geprägte Struktur der untersten Schicht 10 bzw. 12 entspricht in Tiefe und/oder Geometrie einer durch Schleifen hergestellten Struktur. Dabei kommt es nicht auf identische Geometrien und/oder identische Topographien, also auf eine echte Kopie einer durch mechanisches Schleifen hergestellten Struktur an. Denn die erfindungsgemäße Wirkung der Oberfläche wird dann erreicht, wenn gleiche mechanische Dimensionierungen eingehalten werden. Denn diese Dimensionierungen sind maßgeblich für die guten Klebeeigenschaften verantwortlich.

So wird bspw. die Tiefe der geprägten Struktur mit einer mittleren Rauigkeit von kleiner als 20 µm, insbesondere kleiner 10 µm gewählt, die auch bei einem typischen Schleifvorgang erzeugt wird. Gleichzeitig oder alternativ entspricht die Geometrie der geprägten Struktur einer Schleifriefen-Struktur, insbesondere aus parallel gerichteten Riefen.

Nachfolgend wird ein Beispiel für eine erfindungsgemäße Struktur in Form einer Tabelle angegeben, wobei die Struktur mit gängigen Parametern charakterisiert worden ist. Die Messung erfolgte mit einem flächenbasierten Verfahren zur 3D Oberflächenmessung gemäß EN ISO Standard 25178. Insbesondere ist dabei die Fokus-Variation als flächenbasiertes Messverfahren angewendet worden.

| **Name** | **Wert** | **[u]** | **Beschreibung** |
|---|---|---|---|
| Ra | 1.25 | µm | Mittlere Rauheit des Profils |
| Rq | 8.45 | µm | Quadratischer Mittelwert der Rauheit des Profils |
| Rt | 43.9 | µm | Gesamthöhe des Rauheitsprofil |
| Rz | 28.8 | µm | Gemittelte Höhe des Rauheitsprofil |
| Rmax | 34.0 | µm | Maximale Höhe des Rauheitsprofil innerhalb einer Einzelmessstrecke |
| Rp | 21.2 | µm | Höhe der größten Profilspitze des Rauheitsprofil |
| Rv | 22.7 | µm | Tiefe des größten Profiltales des Rauheitsprofil |
| Rc | 25.6 | µm | Mittlere Höhe der Profilunregelmäßigkeiten des Rauheitsprofil |
| Rsm | 364 | µm | Mittlerer Abstand der Profilunregelmäßigkeiten des Rauheitsprofil |

Fig. 4 zeigt eine Presse 20 zur Herstellung von Schichtstoffen, die nach dem CPL-Verfahren arbeitet. Im linken Bereich der Fig. 4 sind eine Mehrzahl von Rollen 22 dargestellt, auf die die blattförmigen Materialien der einzelnen Schichten 4, 6, 8 und 10 - entsprechend dem Ausführungsbeispiel nach Fig. 2 - des zu erzeugenden Schichtstoffs 2 aufgewickelt sind. Die Schichten 4 bis 10 werden kontinuierlich abgewickelt und einer Pressstation 24 zugeführt. Dort werden die Schichten 4 bis 10 zwischen zwei endlose umlaufende Pressbänder 26 und 28 eingeführt und für einen durch die Geschwindigkeit der Pressbänder 26 und 28 vorgegebenen Zeitraum unter hohen Druck gesetzt. Durch eine Heizstation 30 werden die Schichten gleichzeitig mit der Druckbeaufschlagung auf eine hohe Temperatur aufgeheizt. Am rechten Ende der Pressstation 24 verlässt dann der fertige Schichtstoff als kontinuierlicher Strang die Presse 20.

Das erfindungsgemäße Pressmittel zur Herstellung eines Schichtstoffs wird im Ausführungsbeispiel nach Fig. 4 durch das untere Pressband 28 gebildet. Das Pressband 28 weist auf der der unteren Schicht 10 zugewandten Seite eine zuvor beschriebene Struktur auf, die während des Pressvorgangs in der Pressstation 24 in die untere Schicht 10 des zu bildenden Schichtstoffes eingeprägt wird. Dabei entspricht die Struktur des Pressbandes 28 im Wesentlichen einer durch Schleifen hergestellten Struktur, wie sie zuvor erläutert worden ist.

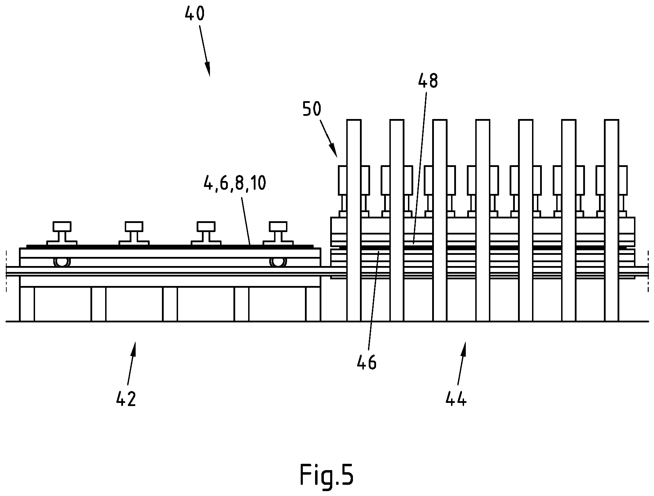

Fig. 5 zeigt nun eine Presse 40 zur Herstellung von Schichtstoffen, die nach dem HPL-Verfahren arbeitet. Im linken Bereich der Fig. 5 ist eine Stapelvorrichtung 42 dargestellt, in der die mehreren Schichten 4 bis 10 des zu bildenden Schichtstoffs 2 gemäß dem Ausführungsbeispiel nach Fig. 2 aufeinander gestapelt werden. Dabei handelt es sich um zugeschnittene, also in ihrer Länge und Breite vorgegebene Blätter.

Mittels eines Lineartransportes werden die gestaffelten Schichten 4 bis 10 der rechts dargestellten Pressstation 44 zugeführt und zwischen einem unteren Pressblech 46 und einem oberen Pressblech 48 angeordnet. Mithilfe einer Mehrzahl von Druckzylindern 50 wird das obere Pressblech 48 abgesenkt, so dass die gestapelten Schichten 4 bis 10 unter einem hohen Druck zusammengepresst werden. Da zusätzlich die Pressbleche 46 und 48 vorgeheizt sind, wird zusätzlich zum Druck auch eine erhöhte Temperatur zugeführt. Nach einer vorgegebenen Zeitspanne wird die Pressstation 44 geöffnet und der fertig gestellte Schichtstoff entnommen.

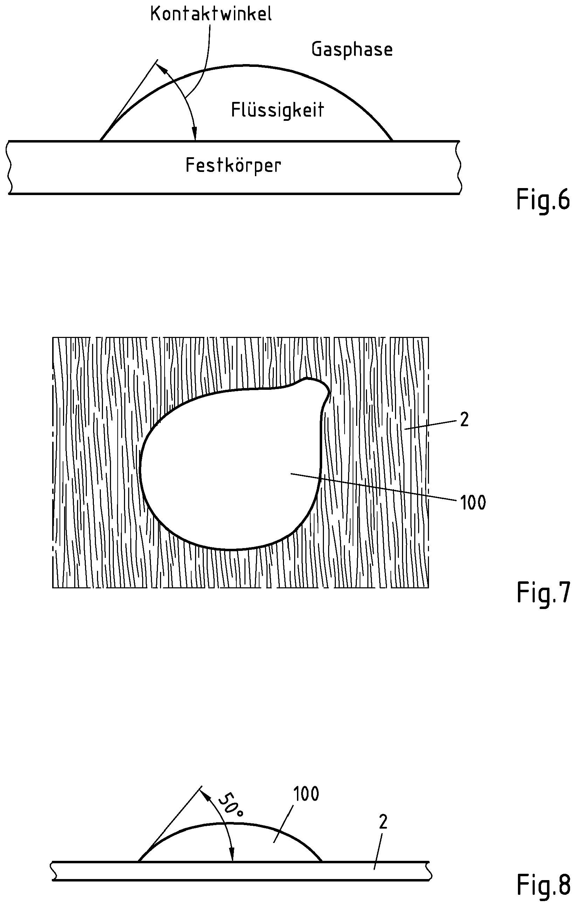

Fig. 6 zeigt ein Prinzipschaubild zur Erläuterung des Begriffs Kontaktwinkel. Auf der Oberfläche des Festkörpers liegt ein Tropfen aus einer Flüssigkeit, der von einer Gasphase, vorzugsweise Luft, umgeben ist. Durch die Oberflächenspannung der Flüssigkeit einerseits und die Oberflächenspannung der Oberfläche des Festkörpers andererseits bildet sich die dargestellte Tropfenform aus. An dem Dreiphasenpunkt, also dort wo die feste Phase, die flüssige Phase und die Gasphase nebeneinander vorliegen, bildet die Oberfläche der Tropfenform einen Winkel mit der Oberfläche des Festkörpers, der als Kontaktwinkel bezeichnet wird. Da die Oberflächenspannung der Flüssigkeit eine Rolle bei der Ausbildung der Tropfenform spielt, kommt es bei der Bestimmung des Kontaktwinkels auch auf die Größe der Fläche, die von der Flüssigkeit auf der Oberfläche des Festkörpers bedeckt wird, an. Daher werden die Flüssigkeit üblicher Weise so dosiert, dass eine vorgegebene Fläche nicht überschritten wird. Beispielsweise sollte bei der Verwendung von Wasser eine Fläche von mehr als 15 mm Durchmesser nicht überschritten werden.

Fig. 7 zeigt ein Photo und eine entsprechende zeichnerische Darstellung eines Wassertropfens 100 auf der Oberfläche eines erfindungsgemäßen Schichtstoffs 2 in einer schrägen Draufsicht. Der Wassertropfen 100 ist in seiner Kontur scharf abgrenzbar, die umgebenden Abschnitte der Oberfläche sind nicht benetzt und das darunter liegende Material des Schichtstoffs 2 hat keine Feuchtigkeit aufgenommen, was an der gleichmäßigen Färbung der Oberfläche zu erkennen ist.

In Fig. 8 ist ein Photo und eine entsprechende zeichnerische Darstellung eines Wassertropfens 100 auf der Oberfläche eines erfindungsgemäßen Schichtstoffs 2 in einer Seitenansicht zur Bestimmung des Kontaktwinkels dargestellt.

Zur Bestimmung des Kontaktwinkels kann beispielsweise die Tropfenkonturanalyse (Drop Shape Analysis, DSA) angewendet werden. Die Tropfenkonturanalyse ist eine Bildanalysemethode zur Bestimmung des Kontaktwinkels aus der Seitenansicht oder aus dem Schattenbild eines liegenden Tropfens auf der Oberfläche. Dazu wird ein Tropfen auf eine feste Oberfläche dosiert (liegender Tropfen). Mit Hilfe einer Kamera wird ein Bild des Tropfens aufgenommen.

Für eine grobe, meist schon ausreichende Analyse kann direkt im Bild der Winkel zwischen der Flüssigkeitsoberfläche und der Oberfläche des Schichtstoffs mit einem Lineal bestimmt werden. Vorliegend wurde in dieser Weise in Fig. 8 mit Hilfe eines Lineals der Kontaktwinkel zu 50° bestimmt.

Bei einer genaueren Analyse kann das Bild in eine Tropfenkonturanalyse-Software übertragen werden. Anhand einer Graustufenanalyse des Bildes wird zunächst eine Konturerkennung durchgeführt. Im zweiten Schritt wird mit einer mathematischen Methode ein die Tropfenkontur beschreibendes, geometrisches Modell an die Kontur gefittet. Der Kontaktwinkel ergibt sich dann aus dem Winkel zwischen der ermittelten Tropfenkontur-Funktion und der Probenoberfläche, deren Projektion im Tropfenbild als Basislinie bezeichnet wird.

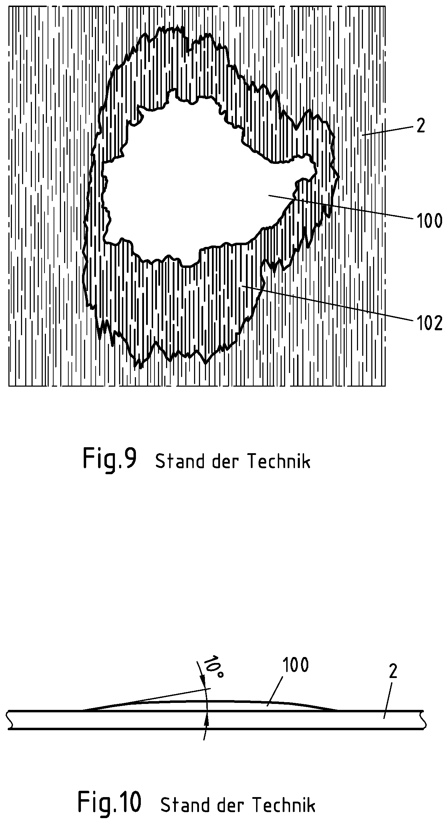

Fig. 9 zeigt ein Photo und eine entsprechende zeichnerische Darstellung eines Wassertropfens 100 auf einer geschliffenen Oberfläche eines Schichtstoffs 102 in einer schrägen Draufsicht, also auf einer Probe, wie sie aus dem Stand der Technik bekannt ist. Im Unterschied zu Fig. 7 ist der aufliegende Tropfen 100 nicht mehr scharf abgrenzbar und der Tropfen 100 hat eine flachere Form als in Fig. 7 dargestellt ist. Zudem sind die den Tropfen 100 umliegenden Abschnitte 104 der Oberfläche dadurch feucht geworden, dass ein Teil des Wassers des Tropfens 100 vom Schichtstoff aufgenommen worden ist. Die Nässe zeigt sich durch die dunkle Verfärbung im Vergleich zu der deutlich helleren weiteren Umgebung der Oberfläche.

In Fig. 10 ist ein Photo und eine entsprechende zeichnerische Darstellung eines Wassertropfens auf einer geschliffenen Oberfläche eines Schichtstoffs 102 in einer Seitenansicht zur Bestimmung des Kontaktwinkels. Wie sich schon aus Fig. 9 ergibt, weist der Tropfen 100 eine flachere Form auf und der Kontaktwinkel wurde in der Photographie mit einem Lineal zu 10° bestimmt.

Für die dargestellten Versuche nach den Fig. 7 bis 10 wurde Leitungswasser mit den folgenden physikalischen und chemischen Eigenschaften verwendet:
- Wassertemperatur 20°C (Raumtemperatur)
- pH-Wert 7,5
- Elektrische Leitfähigkeit bei 25 °C: 709 µS/cm
- Karbonathärte: 11,0 °dH
- Gesamthärte: 13,4 °dH mit einerErdalkalisumme von 2,4 mmol/l
- Nitrat NO₃⁻: 12 mg/l
- Nitrit NO₂⁻: < 0,02 mg/l
- Phosphat (gesamt): PO₄³⁻: 1,2 mg/l
- Kieselsäure SiO₂: 8,8 mg/l
- Fluorid F-: 0,13 mg/l
- Chlorid Cl⁻: 74 mg/l
- Sulfat SO₄²⁻: 59 mg/l
- Hydrogencarbonat HCO₃⁻: 213 mg/l mg/l
- Natrium Na⁺: 35 mg/l
- Magnesium Mg²⁺: 11 mg/l
- Calcium Ca²⁺: 79 mg/l
- Kalium K⁺: 4 mg/l

Die Tropfengröße wurde so dosiert, dass der Tropfen eine Fläche mit einem Durchmesser von ca. 10 bis 15 mm, bei den geschliffenen Schichtstoffen nach Fig. 9 und 10 zu Beginn vor dem Zerfließen aufwies.

## Patentansprüche

1. Schichtstoff zum Aufbringen auf einem Trägermaterial, insbesondere auf eine Trägerplatte,
- mit einer harzimprägnierten Dekorschicht (4) und
- mit mindestens einer harzimprägnierten Kernschicht (6, 8, 10),
- wobei die Dekorschicht (4) und die mindestens eine Kernschicht (6, 8,10) miteinander verpresst sind und
- wobei die Oberfläche der der Dekorschicht gegenüberliegend angeordneten Kernschicht (10, 12) mit einer geprägten Struktur versehen ist,
**dadurch gekennzeichnet,**
- **dass** die geprägte Struktur in Tiefe und Geometrie einer durch Schleifen hergestellten Struktur entspricht und
- **dass** die Geometrie der geprägten Struktur einer Schleifriefen-Struktur entspricht.

2. Schichtstoff nach Anspruch 1,
**dadurch gekennzeichnet,**
**dass** ein Leitungswassertropfens bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

3. Schichtstoff nach Anspruch 1 oder 2,
dass die Tiefe der geprägten Struktur eine mittlere Rauigkeit von kleiner als 20 µm, insbesondere kleiner 10 µm aufweist.

4. Schichtstoff nach einem der Ansprüche 1 bis 3,
**dadurch gekennzeichnet,**
**dass** die Geometrie der geprägten Struktur einer Schleifriefen-Struktur aus parallel gerichteten Riefen entspricht.

5. Schichtstoff nach einem der Ansprüche 1 bis 4,
**dadurch gekennzeichnet,**
**dass** die der als Dekorpapier ausgebildeten Dekorschicht (4) gegenüberliegend angeordnete Schicht (10,12) als ein in seinen Eigenschaften dem Dekorpapier entsprechenden Gegenzugpapier ausgebildet ist.

6. Schichtstoff nach Anspruch 5,
**dadurch gekennzeichnet,**
**dass** die dem Dekorpapier gegenüberliegend angeordnete Schicht mit einem Harz imprägniert ist, das in seinem Zugverhalten dem Harz entspricht, das für die Imprägnierung des Dekorpapiers angewendet wird, das vorzugsweise vom gleichen Typ ist.

7. Verfahren zur Herstellung eines Schichtstoffs zum Aufbringen auf einem Trägermaterial, insbesondere auf eine Trägerplatte,
- bei dem eine harzimprägniertes Dekorschicht und mit mindestens eine harzimprägnierte Kernschicht aufeinander geschichtet werden,
- bei dem die Dekorschicht und die mindestens eine Kernschicht unter Druck und Wärme miteinander verpresst werden und
- bei dem die Oberfläche der der Dekorschicht gegenüberliegend angeordneten Kernschicht mit einem Pressmittel mit einer Struktur verpresst und geprägt wird,
**dadurch gekennzeichnet,**
- **dass** die geprägte Struktur in Tiefe und Geometrie einer durch Schleifen hergestellten Struktur entspricht und
- **dass** die Geometrie der geprägten Struktur einer Schleifriefen-Struktur entspricht.

## Claims

1. Laminate for application on a carrier material, in particular on a carrier plate,
- with a resin-impregnated decorative layer (4), and
- with at least one resin-impregnated core layer (6, 8, 10),
- wherein the decorative layer (4) and the at least one core layer (6, 8, 10) are pressed together, and
- wherein the surface of the core layer (10, 12) arranged opposite to the decorative layer is provided with an embossed structure,
**characterised in that**
- the embossed structure corresponds in depth and geometry to a structure produced by grinding, and
- **in that** the geometry of the embossed structure corresponds to a grinding-groove structure.

2. Laminate according to Claim 1,
**characterised in that**
a tap-water drop at room temperature with a maximum diameter of 15 mm takes a contact angle of more than 40°, in particular more than 50°, with the layer that has the embossed structure.

3. Laminate according to Claim 1 or 2,
**characterised in that**
the depth of the embossed structure has an average roughness of less than 20 µm, in particular less than 10 µm.

4. Laminate according to any one of Claims 1 to 3,
**characterised in that**
the geometry of the embossed structure corresponds to a grinding-groove structure consisting of grooves oriented parallel to one another.

5. Laminate according to any one of Claims 1 to 4,
**characterised in that**
the layer (10, 12) arranged opposite to the decorative layer (4) formed as decorative paper is arranged in its properties as a counteracting paper for the decorative paper.

6. Laminate according to Claim 5,
**characterised in that**
the layer arranged opposite to the decorative paper is impregnated with a resin which corresponds in its tensile behaviour to the resin which is used for the impregnation of the decorative layer, which is preferably of the same type.

7. Method for producing a laminate for application on a carrier material, in particular on a carrier plate,
- in which a resin-impregnated decorative layer and at least one resin-impregnated core layer are layered on top of each other,
- in which the decorative layer and the at least one core layer are pressed together under pressure and heat, and
- in which the surface of the core layer arranged opposite to the decorative layer is pressed and embossed by a pressing means with a structure,
**characterised in that**
- the embossed structure corresponds in depth and geometry to a structure made by grinding, and
- **in that** the geometry of the embossed structure corresponds to a grinding-groove structure.

## Revendications

1. Matériau stratifié destiné à être appliqué sur un matériau support, en particulier sur un panneau support,
- comprenant une couche décorative (4) imprégnée de résine et
- comprenant au moins une couche formant l'âme centrale (6, 8, 10) et imprégnée de résine,
- où la couche décorative (4) et la couche - au moins au nombre de un - formant l'âme centrale (6, 8, 10) sont comprimées l'une avec l'autre, et
- où la surface de la couche formant l'âme centrale (10, 12) et disposée en étant placée à l'opposé de la couche décorative est dotée d'une structure gaufrée,
**caractérisé**
- **en ce que** la structure gaufrée correspond, en profondeur et en géométrie, à une structure fabriquée par rectification réalisée par meulage, et
- **en ce que** la géométrie de la structure gaufrée correspond à une structure à stries de rectification réalisée par meulage.

2. Matériau stratifié selon la revendication 1,
**caractérisé**
**en ce qu'**une goutte d'eau de conduite, à température ambiante et ayant un diamètre maximum de 15 mm, forme, avec la couche présentant la structure gaufrée, un angle de contact supérieur à 40°, en particulier supérieur à 50°.

3. Matériau stratifié selon la revendication 1 ou 2,
**caractérisé**
**en ce que** la profondeur de la structure gaufrée présente une rugosité moyenne inférieure à 20 µm, en particulier inférieure à 10 µm.

4. Matériau stratifié selon l'une quelconque des revendications 1 à 3,
**caractérisé**
**en ce que** la géométrie de la structure gaufrée correspond à une structure à stries de rectification réalisée par meulage, ladite structure se composant de stries orientées de façon parallèle.

5. Matériau stratifié selon l'une quelconque des revendications 1 à 4,
**caractérisé**
**en ce que** la couche (10, 12) disposée en étant placée à l'opposé de la couche décorative (4) et formée comme un papier décoratif est configurée comme un papier à contretraction correspondant, concernant ses propriétés, au papier décoratif.

6. Matériau stratifié selon la revendication 5,
**caractérisé**
**en ce que** la couche disposée en étant placée à l'opposé du papier décoratif est imprégnée d'une résine qui correspond, concernant sa tenue à la traction, à la résine qui est utilisée pour l'imprégnation du papier décoratif, laquelle résine est de préférence du même type.

7. Procédé de fabrication d'un matériau stratifié destiné à être appliqué sur un matériau support, en particulier sur un panneau support,
- procédé au cours duquel une couche décorative imprégnée de résine et comprenant au moins une couche formant l'âme centrale et imprégnée de résine sont stratifiées l'une sur l'autre,
- procédé au cours duquel la couche décorative et la couche - au moins au nombre de un - formant l'âme centrale sont comprimées l'une avec l'autre sous l'effet de la pression et de la chaleur, et
- procédé au cours duquel la surface de la couche formant l'âme centrale et disposée en étant placée à l'opposé de la couche décorative est comprimée et gaufrée avec un moyen de compression ayant une structure,
**caractérisé**
- **en ce que** la structure gaufrée correspond, en profondeur et en géométrie, à une structure fabriquée par rectification réalisée par meulage, et
- **en ce que** la géométrie de la structure gaufrée correspond à une structure à stries de rectification réalisée par meulage.
